# FASCICULE DE BREVET EUROPEEN

(11) **EP 1 003 983 B1**
(45) Date de publication et mention de la délivrance du brevet: **21.05.2003**
(21) Numéro de dépôt: 99925109.3
(22) Date de dépôt: 16.06.1999
(51) Int. Cl.: F16G 11/06, E01D 19/16

(54) **PROCEDE ET DISPOSITIF D'ACCROCHAGE D'UN ELEMENT TRANSMETTEUR DE CHARGE SUR UN CABLE, ET PONT SUSPENDU COMPORTANT DE TELS DISPOSITIFS**
VERFAHREN UND VORRICHTUNG ZUR BEFESTIGUNG EINES LASTÜBERTRAGENDEN ELEMENTS AN EINEM SEIL, UND SOLCHE VORRICHTUNGEN AUFWEISENDE HÄNGEBRÜCKE
METHOD AND DEVICE FOR FIXING A LOAD-TRANSMITTING ELEMENT ON A CABLE, AND CABLE-SUSPENDED BRIDGE COMPRISING SAID DEVICES

(30) Priorité: 19.06.1998 FR 9807782
(43) Date de publication de la demande: 31.05.2000
(73) Titulaire: FREYSSINET INTERNATIONAL STUP, 78140 Vélizy Cedex (FR)
(72) Inventeur: JARTOUX, Pierre, F-78000 Versailles (FR); STUBLER, Jérôme, F-75007 Paris (FR)
(74) Mandataire: Loisel, Bertrand
(86) Numéro de dépôt international: FR9901441
(87) Numéro de publication internationale: WO99067550

(56) Documents cités:
- EP-A- 0 789 110
- FR-A- 2 739 113

## Description

La présente invention se rapporte à l'utilisation de câbles dans les techniques de construction, et plus particulièrement aux méthodes employées pour accrocher des éléments transmetteurs de charge sur un câble de structure.

L'invention trouve une application importante mais non exclusive dans le domaine des ponts suspendus. Il s'agit alors d'accrocher à un câble porteur du pont, formé par un ou plusieurs faisceaux de brins, des suspentes transmettant la charge du tablier.

Cet accrochage est généralement réalisé au moyen de colliers formés chacun de plusieurs coquilles qui sont serrées autour du câble par moyens tels que des boulons, chaque suspente étant fixée à l'une des coquilles de son collier. L'application de l'effort de serrage sur le collier permet au câble porteur de reprendre par frottement les composantes tangentielles des efforts transmis par les suspentes.

Dans le brevet français 2 739 113, il a été suggéré de constituer le câble porteur à partir d'un faisceau de torons "cohérents". Chaque toron cohérent comporte un toron proprement dit, formé d'un assemblage toronné de sept fils métalliques ou davantage, enrobé d'un matériau élastomère adhérent et entouré par une gaine individuelle en matière plastique, le toron et le matériau élastomère remplissant l'espace intérieur de la gaine individuelle.

Cette structure de toron limite l'intensité requise pour le serrage, ce qui améliore la fiabilité du système.

La demande de brevet européen 0 789 110 décrit l'insertion, au sein d'un câble constitué de torons individuellement protégés (par exemple de torons cohérents), d'éléments de remplissage placés au droit des colliers d'accrochage et venant combler les interstices à section en forme de triangle curviligne formés entre les gaines individuelles des torons assemblés.

Cette disposition assure une transmission plus homogène des efforts de serrage des colliers aux brins en tension. Au niveau des colliers, le câble porteur est contenu dans une enveloppe tubulaire en matière plastique, avec des éléments déformables interposés entre l'enveloppe et le faisceau de brins. Cet ensemble subit un écrasement instantané lors du serrage des colliers, ainsi qu'un écrasement différé sous l'effet du fluage des matériaux, généralement plastiques, formant l'enveloppe, les éléments déformables et/ou les éléments de remplissage.

Dans le cas représentatif d'un collier de diamètre intérieur 400 mm, le tassement différé de cet ensemble sous l'effet du fluage est typiquement de l'ordre de 1 mm. Cette valeur peut provoquer un desserrage du collier, dont les conséquences peuvent être désastreuses. Il en résulte de fréquentes interventions pour vérifier l'état de serrage des colliers et procéder aux resserrages requis.

La présente invention a pour but d'améliorer le serrage des colliers d'accrochage sur un câble de structure.

L'invention propose ainsi un dispositif d'accrochage d'un élément transmetteur de charge sur un câble, comprenant un collier formé d'au moins deux coquilles et des moyens de serrage du collier autour du câble, au moins une des coquilles comportant des moyens de liaison avec l'élément transmetteur de charge. Le câble comporte un ensemble de brins tendus contenus dans une matrice au droit du collier, une partie au moins de la matrice étant en une matière plastique susceptible de fluer sous l'action des moyens de serrage. Selon l'invention, les moyens de serrage comprennent des éléments de serrage de forme allongée transmettant un effort de serrage aux coquilles du collier et contraints de façon à présenter une déformation élastique longitudinale sensiblement supérieure au tassement maximal par fluage de la matrice.

Les éléments de serrage précontraints procurent en quelque sorte une réserve de déformation permettant d'absorber le tassement de l'ensemble situé sous le collier sous l'effet du fluage. En prévoyant que l'allongement élastique de ces éléments de serrage soit largement plus grand que le tassement prévisible du câble par fluage (typiquement au moins cinq fois plus grand), on garantit que le serrage sera maintenu à une valeur contrôlable et proche de la valeur initiale.

Dans des modes de réalisation préférés du dispositif selon l'invention :
- chaque brin tendu du câble consiste en un toron enrobé d'un matériau élastomère adhérent et entouré par une gaine individuelle en matière plastique, le toron et le matériau élastomère remplissant l'espace intérieur de la gaine individuelle (toron cohérent) ;
- la matrice comprend des inserts de section en forme de triangle curviligne placés pour combler, au droit du collier, les interstices de forme complémentaire qui se trouvent entre les gaines individuelles des brins assemblés en faisceau, ainsi qu'éventuellement des éléments en élastomère disposés à la périphérie du faisceau de brins, et une enveloppe tubulaire en matière plastique entourant les éléments élastomères, sur laquelle les coquilles du collier prennent appui.
- l'élément de serrage de forme allongée est une tige métallique dont au moins une extrémité présente un filetage pour recevoir un écrou utilisé pour la contraindre, ou encore un câble tendu dont au moins une extrémité est bloquée à l'aide d'un mors d'ancrage.
- l'élément de serrage de forme allongée est logé dans au moins un tube entretoise rempli d'un matériau protecteur tel qu'une cire pétrolière, une graisse ou une résine.

Un second aspect de la présente invention se rapporte à un pont suspendu, comprenant au moins un câble porteur ancré à ses deux extrémités et un tablier suspendu au câble porteur par l'intermédiaire de suspentes, certaines au moins des suspentes étant accrochées au câble porteur au moyen de dispositifs d'accrochage tels que définis ci-dessus.

Avantageusement, le dispositif d'accrochage présente une portion qui dépasse sensiblement au-dessus du câble porteur et qui contient un élément de serrage contraint, l'extrémité supérieure de ladite portion étant munie de moyens de fixation d'une main courante pour la circulation de personnels le long du câble porteur du pont.

Un autre aspect de la présente invention se rapporte à un procédé d'accrochage d'un élément transmetteur de charge sur un câble, au moyen d'un collier formé d'au moins deux coquilles, le câble comportant un ensemble de brins tendus contenus dans une matrice au droit du collier, une partie au moins de la matrice étant en une matière plastique susceptible de fluer sous l'action d'un serrage exercé sur le collier. Dans ce procédé, on serre les coquilles du collier autour du câble à l'aide d'éléments de serrage de forme allongée qu'on contraint de façon qu'ils présentent une déformation élastique longitudinale sensiblement supérieure au tassement maximal par fluage de la matrice.

Le procédé comprend avantageusement une étape d'application simultanée des contraintes aux éléments de serrage de forme allongée au moyen d'un système hydraulique, et une étape de blocage des éléments de serrage de forme allongée en position contrainte. Ceci permet d'équilibrer les efforts sur l'ensemble des éléments de serrage d'un même collier, et évite de soumettre les éléments à des efforts individuels de serrage générateurs de torsion.

Dans des modes d'exécution particuliers du procédé :
- on effectue les étapes d'application simultanée des contraintes et de blocage en position contrainte après avoir installé le collier autour du câble, ainsi que lors d'opérations ultérieures de contrôle et de resserrage ;
- l'étape d'application simultanée des contraintes comprend une première phase pendant laquelle le système hydraulique exerce un excès de contrainte, suivie par une seconde phase dans laquelle on réduit les contraintes appliquées avant de procéder à l'étape de blocage.

D'autres particularités et avantages de la présente invention apparaîtront dans la description ci-après d'exemples de réalisation non limitatifs, en référence aux dessins annexés, dans lesquels :
- la figure 1 est une vue schématique générale d'un pont suspendu selon l'invention ;
- la figure 2 est une vue en coupe transversale d'un des torons cohérents d'un câble porteur du pont suspendu de la figure 1 ;
- la figure 3 est une vue en coupe transversale montrant l'agencement de tels torons dans le câble porteur au niveau d'un collier d'accrochage de suspente ;
- les figures 4 et 5 sont des vues en coupe transversale de deux formes de réalisation de dispositifs d'accrochage selon l'invention ;
- la figure 6 est un schéma illustrant une manière d'exercer la précontrainte sur les éléments de serrage de tels dispositifs ; et
- la figure 7 montre schématiquement une variante de moyens de serrage du collier.

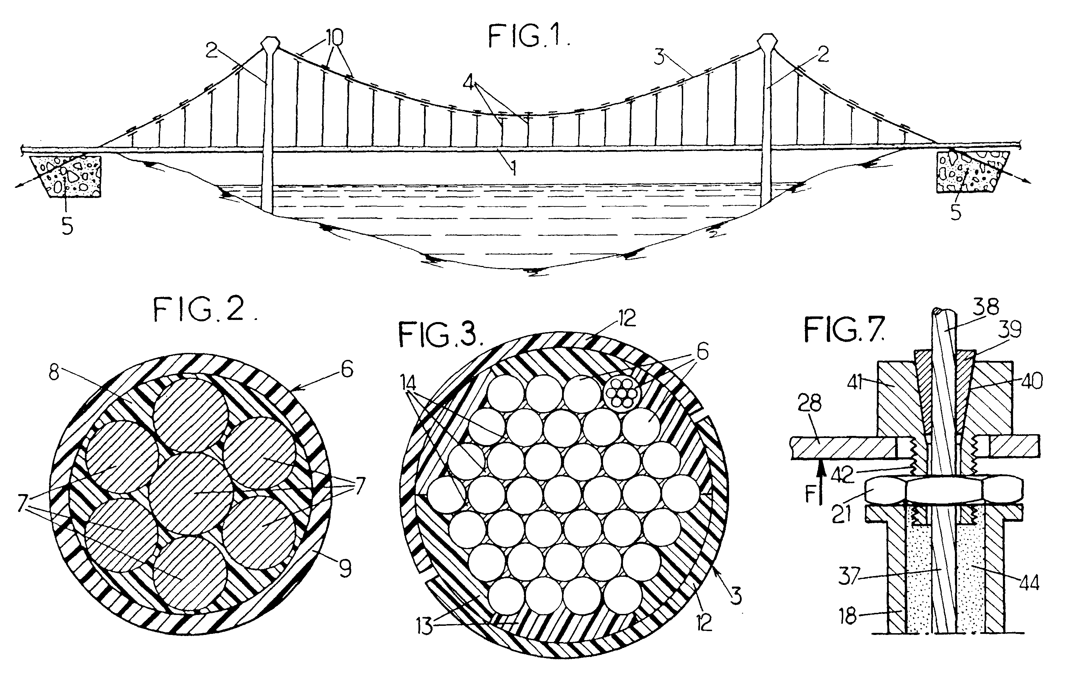

Le pont suspendu représenté à titre d'exemple sur la figure 1 comporte classiquement un tablier 1, deux pylônes 2, deux câbles porteurs parallèles 3, dont un seul est visible sur le dessin, et un ensemble de suspentes 4 accrochées aux câbles 3 au moyen de colliers respectifs 10, et qui portent le tablier 1 en transmettant sa charge aux câbles porteurs 3. Les câbles porteurs 3 sont tendus entre deux ancrages au sol 5 aux deux extrémités du pont et ils sont soutenus par les pylônes 2. Comme représenté, les câbles porteurs 3 peuvent être discontinus au droit des pylônes 2, avec ancrage sur ces pylônes.

Chaque câble porteur 3 est réalisé par assemblage de torons individuellement protégés 6 du type représenté sur la figure 2.

Chacun des ces torons est constitué de plusieurs fils d'acier torsadés 7, éventuellement galvanisés, qui sont ici au nombre de sept et qui sont noyés dans un élastomère 8 tels que du polybutadiène ou analogue. L'élastomère 8 est lui-même recouvert par une gaine extérieure 9 de matière plastique flexible qui peut être une polyoléfine, notamment du polyéthylène haute densité (PEHD) ou encore un polyamide. L'élastomère 8 adhère sur les fils torsadés 7 constituant le toron proprement dit, par adhérence de surface et par adhérence de forme. Cet élastomère 8 est en outre adhérisé avec la gaine individuelle 9 en PEHD. Pour davantage de détails sur la réalisation de ce toron cohérent 6, on pourra se reporter au brevet français 2 739 113.

La gaine individuelle 9 fait corps avec les fils d'acier 7 du toron, de sorte que les efforts appliqués à cette gaine parallèlement à l'axe du toron 6 sont convenablement transmis aux fils d'acier 7.

La figure 3 montre la structure d'un câble porteur 3 constitué par un faisceau de trente-sept torons cohérents 6. Vus en coupe transversale, ces torons 6 sont agencés selon une maille hexagonale, et définissent entre eux des interstices en forme de triangle curviligne.

Au droit des colliers 10, le faisceau de torons est logé dans une enveloppe tubulaire formée en réunissant deux coquilles hémicylindriques 12 en matière plastique telle qu'un PEHD. Entre le faisceau hexagonal de torons et la face interne de l'enveloppe 12, des éléments en élastomère 13 sont disposés pour maintenir en place le faisceau dans l'enveloppe et pour transmettre au faisceau les efforts de serrage exercés par les colliers d'accrochage 10.

Des inserts 14 en matière plastique, par exemple en PEHD sont placés dans les interstices en forme de triangle curviligne définis entre les gaines individuelles 9 des torons 6 de manière à combler ces interstices au niveau des colliers 10. Les inserts 14 assurent une bonne répartition des efforts de serrage entre les différents torons cohérents 6, comme expliqué dans la demande de brevet européen 0 789 110.

Ainsi, au droit des colliers 10, le faisceau de toron 6 est contenu dans une matrice constituée par l'enveloppe tubulaire 12, les éléments élastomères 13 et les inserts 14.

Cette matrice est susceptible de se tasser par fluage sous l'action du serrage exercé par les colliers 10. Comme indiqué précédemment, une valeur typique de ce tassement pour un câble de diamètre 400 mm est de 1 mm. Si les colliers sont serrés de façon classique par des boulons en acier de module d'Young 20000 kg/mm², de longueur active 150 mm, avec une contrainte de tension de 50 kg/mm², l'allongement élastique de ces boulons est de 150×50/20000 = 0,375 mm, ce qui est insuffisant au regard du tassement de 1 mm auquel on peut s'attendre. On voit donc que le fluage différé de la matrice contenant le câble au droit des colliers fait disparaître le serrage initialement appliqué.

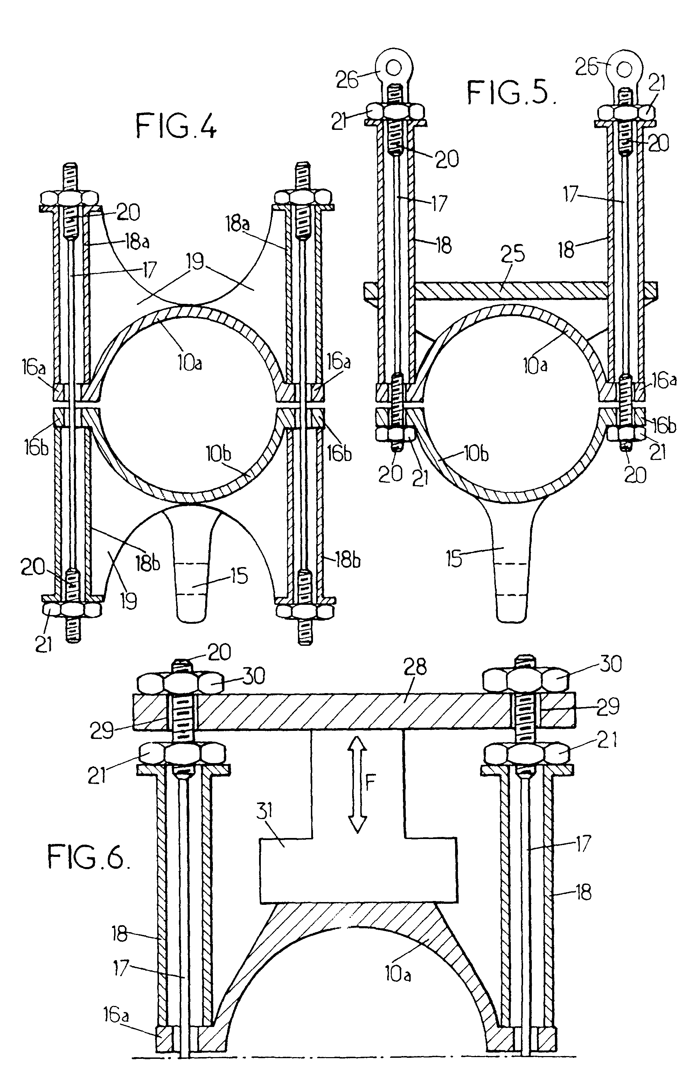

Pour éviter cet inconvénient, on peut utiliser un dispositif d'accrochage tel que celui représenté sur la figure 4. Le collier 10 est formé de deux coquilles hémicylindriques 10a,10b (ou davantage) , qui prennent appui sur l'enveloppe tubulaire 12 du câble. Le collier comporte, par exemple sur sa coquille inférieure 10b, un organe de liaison 15 permettant le raccordement avec articulation de l'extrémité supérieure de la suspente 4.

Au niveau du plan médian, où elles se font face avec un petit intervalle, les coquilles 10a,10b sont pourvues de prolongements latéraux 16a,16b dans lesquels sont formés des trous pour le passage d'éléments de serrage 17.

Les éléments de serrage 17 ont une forme allongée. Ils peuvent être au nombre de quatre ou davantage pour chaque collier 10.

Chaque élément de serrage 17 est enfilé dans deux tubes entretoises 18a,18b, l'un prenant appui contre un prolongement latéral 16a de la coquille supérieure 10a, et l'autre prenant appui contre un prolongement latéral 16b de la coquille inférieure 10b.

Les tubes entretoises 18a,18b peuvent faire corps avec les coquilles 10a,10b, ou constituer des pièces séparées. Chaque coquille 10a,10b peut être pourvue de nervures 19 dans des plans transversaux à la direction du câble, pour soutenir les tubes entretoises 18a,18b.

Dans le mode de réalisation de la figure 4, les éléments de serrage 17 de forme allongée consistent en des tiges métalliques, dont la section peut être de l'ordre du dixième de la section intérieure du tube entretoise, et dont les extrémités 20 sont filetées. Un écrou 21 est vissé sur chaque extrémité filetée 20 et prend appui sur l'extrémité du tube entretoise correspondant 18a,18b à l'opposé du prolongement latéral 16a,16b de la coquille.

Ces écrous 21 sont serrés de façon à maintenir une précontrainte sur les tiges métalliques 17. Cette précontrainte est telle que les tiges 17 subissent une déformation élastique longitudinale supérieure au tassement maximal par fluage de la matrice contenant les torons au droit du collier. Cette déformation ou allongement élastique dépasse de préférence cinq fois le tassement maximal par fluage de la matrice.

En choisissant pour réaliser les tiges 17 un acier de module d'Young de l'ordre de 20000 kg/mm² et pouvant supporter des contraintes de tension de 120 kg/mm² (valeur courante dans les applications de la précontrainte), on pourra ainsi prévoir d'utiliser de telles tiges 17 dont la longueur serait de l'ordre de 1 m, conduisant à un allongement élastique de l'ordre de 1000×120/20000 = 6 mm. On voit alors que le tassement typique de 1 mm sous l'effet du fluage ne fait perdre que 16% de l'effort de serrage initialement appliqué.

Dans le dispositif de serrage représenté sur la figure 4, l'agencement général des moyens de serrage est symétrique de part et d'autre du plan médian du collier. Les tubes entretoises 18a,18b peuvent alors avoir une longueur de l'ordre de 50 cm.

Dans la variante de réalisation de la figure 5, il y a un seul tube entretoise 18 pour chaque tige précontrainte 17. L'écrou inférieur 21 prend appui directement sur le prolongement latéral 16b de la coquille inférieure 10b, tandis que le tube entretoise 18, dont la longueur est de l'ordre de 1 m, prend appui sur le prolongement 16a de la coquille supérieure 10a.

La figure 5 montre en outre une plate-forme 25 prévue au-dessus du câble porteur 3 pour permettre la circulation de personnels le long du câble. Cette plate-forme 25 peut notamment être fixée sur les coquilles supérieures 10a des colliers. Le fait que les tubes entretoises 18 et les tiges précontraintes 17 dépassent d'environ 1 m au-dessus du câble porteur 3 permet de fixer à leurs extrémités supérieures des organes tels que des anneaux 26 permettant d'installer une main courante pour les personnels circulant sur la plate-forme. Ces organes 26 sont par exemple vissés sur les extrémités filetées 20 des tiges 17 dépassant au-dessus des écrous 21.

La figure 6 illustre une manière avantageuse d'exercer la précontrainte sur les tiges de serrage 17.

Après installation des coquilles 10a,10b sur le câble 3, les tubes entretoises 18 (ou 18a,18b) sont mis en place, ainsi que les écrous supérieurs et inférieurs 21, qui ne sont pas serrés à ce stade.

Une plaque 28 dans laquelle des trous 29 sont ménagés au niveau des extrémités supérieures 20 des tiges 17 est installée au-dessus de l'ensemble de façon que les extrémités 20 des tiges 17 dépassent à travers les trous 29. Un écrou 30 est alors vissé sur chacune des extrémités filetées 20 dépassant au-dessus de la plaque 28. Un système hydraulique 31 pouvant consister en un ou plusieurs vérins, est disposé entre la face supérieure de la coquille 10a et la face inférieure de la plaque 28. Un agencement similaire (plaque 28, écrous 30 et système hydraulique 31) peut éventuellement être disposé symétriquement sous la coquille inférieure 10b du collier.

Dans une première étape, le système hydraulique 31 est alimenté de façon à exercer un effort F qui met en tension les tiges 17, dont l'extrémité supérieure 20 est soulevée par l'écrou 30 sollicité par la plaque 28. Lorsque l'effort nominal F est appliqué, ou lorsque la déformation requise des tiges 17 est obtenue, les écrous supérieurs 21 sont amenés au contact de l'extrémité supérieure des tubes entretoises 18, ce qui bloque les tiges 17 en position contrainte. On peut alors désactiver le système hydraulique 31, démonter les écrous provisoires 30 et la plaque 28, et enlever le système hydraulique 31.

Cette façon d'exercer le serrage évite d'exercer des torsions sur les tiges 17, et permet un bon équilibrage des efforts entre les différentes tiges 17 utilisées pour serrer le même collier.

Dans l'étape où le système hydraulique 31 est alimenté, il est possible de commencer par appliquer un excès de serrage initial, c'est-à-dire un effort F supérieur à l'effort nominal, afin de réaliser un fluage plus rapide de la matrice contenant le faisceau de torons. Cet excès de serrage initial est supprimé après une durée pouvant être de quelques heures. L'effort nominal est alors appliqué avant de bloquer les tiges au moyen des écrous 21.

La méthode de serrage décrite ci-dessus à l'aide de la plaque 28, des écrous 30 et du système hydraulique 31 peut être appliquée au moment de l'installation des colliers 10, mais également lors d'opérations ultérieures de contrôle et, éventuellement, de resserrage. Ces opérations n'ont néanmoins pas besoin d'être aussi fréquentes que si les éléments de serrage 17 n'étaient pas précontraints conformément à l'invention.

La figure 7 montre une variante de réalisation de l'invention, dans laquelle les éléments de serrage de forme allongée ne sont pas des tiges filetées, mais des câbles 37 constitués d'un ou plusieurs torons (un seul dans l'exemple représenté).

Le toron 37 est logé dans le tube entretoise 18, et son extrémité supérieure 38 est bloquée par un mors d'ancrage 39 de forme générale tronconique composé de plusieurs clavettes. Le côté extérieur du mors d'ancrage 39 prend appui contre une surface tronconique complémentaire d'un orifice 40 ménagé dans une douille 41. En dessous de la portion pourvue de l'orifice 40, la douille 41 présente un prolongement fileté 42 sur lequel l'écrou de serrage 21 vient en prise.

Comme le montre la figure 7, la douille 41 présente, entre sa portion filetée 42 et sa portion comprenant l'orifice tronconique 40, un épaulement contre lequel vient s'appuyer la plaque 28 utilisée pour mettre en tension les éléments de serrage 37. Lorsque cette plaque 28 est sollicitée par la force F exercée par le système hydraulique 31, la douille 41 est soulevée, ce qui agrippe fermement le mors d'ancrage 39 sur le toron 37. Une fois que l'effort requis est appliqué, l'écrou 21 est descendu le long de la portion filetée 42 pour venir en appui sur l'extrémité supérieure du tube entretoise 18.

L'extrémité inférieure du toron 37 peut également être ancrée à l'aide d'un mors 39, ou simplement bloquée à l'aide d'une protubérance formée par filage ou matriçage à l'extrémité du toron.

Comme le montre la figure 7, le tube entretoise 18 contenant le toron 37 est avantageusement rempli d'un matériau protecteur 44 pouvant être une cire pétrolière, une graisse, ou encore une résine. Un tel matériau protecteur 44 peut également être prévu dans le cas où l'élément de serrage de forme allongée est d'un autre type, comme par exemple une tige filetée 17.

Bien qu'on ait décrit l'invention dans son application préférée aux ponts suspendus, on comprendra qu'elle est applicable à d'autres structures utilisant des câbles sollicités transversalement.

## Revendications

1. Dispositif d'accrochage d'un élément transmetteur de charge (4) sur un câble (3), comprenant un collier (10) formé d'au moins deux coquilles (10a,10b) et des moyens de serrage du collier autour du câble, au moins une des coquilles comportant des moyens (15) de liaison avec l'élément transmetteur de charge, le câble comportant un ensemble de brins tendus (6) contenus, au droit du collier, dans une matrice déformable (12,13,14) comblant les interstices entre les brins, une partie au moins de la matrice étant en une matière plastique susceptible de fluer sous l'action des moyens de serrage, **caractérisé en ce que** les moyens de serrage comprennent des éléments de serrage de forme allongée (17; 37) transmettant un effort de serrage aux coquilles du collier et contraints de façon à présenter une déformation élastique longitudinale sensiblement supérieure au tassement maximal par fluage de la matrice.

2. Dispositif selon la revendication 1, dans lequel chaque élément de serrage de forme allongée (17; 37) est contraint de façon à présenter une déformation élastique longitudinale au moins cinq fois supérieure au tassement maximal par fluage de la matrice (12,13,14).

3. Dispositif selon la revendication 1 ou 2, dans lequel chaque brin tendu (6) du câble consiste en un toron (7) enrobé d'un matériau élastomère adhérent (8) et entouré par une gaine individuelle (9) en matière plastique, le toron et le matériau élastomère remplissant l'espace intérieur de la gaine individuelle.

4. Dispositif selon la revendication 3, dans lequel la matrice comprend des inserts (14) de section en forme de triangle curviligne placés pour combler, au droit du collier (10), les interstices de forme complémentaire qui se trouvent entre les gaines individuelles (9) des brins (6) assemblés en faisceau.

5. Dispositif selon la revendication 4, dans lequel la matrice comprend en outre des éléments en élastomère (13) disposés à la périphérie du faisceau de brins (6), et une enveloppe tubulaire (12) en matière plastique entourant les éléments élastomères, sur laquelle les coquilles (10a, 10b) du collier prennent appui.

6. Dispositif selon l'une quelconque des revendications 1 à 5, dans lequel chaque élément de serrage de forme allongée (17) est une tige métallique dont au moins une extrémité présente un filetage (20) pour recevoir un écrou (21) utilisé pour la contraindre.

7. Dispositif selon l'une quelconque des revendications 1 à 5, dans lequel les éléments de serrage de forme allongée sont des câbles tendus (37) bloqués à au moins une extrémité (38) à l'aide de mors d'ancrage (39).

8. Dispositif selon l'une quelconque des revendications 1 à 7, dans lequel chaque élément de serrage de forme allongée (17) est logé dans au moins un tube entretoise (18a,18b; 18) rempli d'un matériau protecteur (44) tel qu'une cire pétrolière, une graisse ou une résine.

9. Pont suspendu, comprenant au moins un câble porteur (3) ancré à ses deux extrémités et un tablier (1) suspendu au câble porteur par l'intermédiaire de suspentes (4), dans lequel certaines au moins des suspentes sont accrochées au câble porteur au moyen de dispositifs conformes à l'une quelconque des revendications 1 à 8.

10. Pont suspendu, selon la revendication 9, dans lequel le dispositif d'accrochage présente une portion (18) qui dépasse sensiblement au-dessus du câble porteur (3) et qui contient un élément de serrage contraint (17), l'extrémité supérieure de ladite portion étant munie de moyens (26) de fixation d'une main courante pour la circulation de personnels le long du câble porteur.

11. Procédé d'accrochage d'un élément transmetteur de charge (4) sur un câble (3), au moyen d'un collier (10) formé d'au moins deux coquilles (10a,10b), le câble comportant un ensemble de brins tendus (6) contenus dans une matrice (12,13,14) au droit du collier, une partie au moins de la matrice étant en une matière plastique susceptible de fluer sous l'action d'un serrage exercé sur le collier, dans lequel on serre les coquilles du collier autour du câble à l'aide d'éléments de serrage de forme allongée (17; 37) qu'on contraint de façon qu'ils présentent une déformation élastique longitudinale sensiblement supérieure au tassement maximal par fluage de la matrice.

12. Procédé selon la revendication 11, comprenant une étape d'application simultanée des contraintes aux éléments de serrage de forme allongée (17; 37) au moyen d'un système hydraulique (31), et une étape de blocage des éléments de serrage de forme allongée en position contrainte.

13. Procédé selon la revendication 12, dans lequel on effectue lesdites étapes d'application simultanée des contraintes et de blocage en position contrainte après avoir installé le collier (10) autour du câble (3), ainsi que lors d'opérations ultérieures de contrôle et de resserrage.

14. Procédé selon la revendication 12 ou 13, dans lequel l'étape d'application simultanée des contraintes comprend une première phase pendant laquelle le système hydraulique (31) exerce un excès de contrainte, suivie par une seconde phase dans laquelle on réduit les contraintes appliquées avant de procéder à l'étape de blocage.

## Patentansprüche

1. Befestigungsvorrichtung für ein lastübertragendes Element (4) an einem Seil (3), umfassend eine aus wenigstens zwei Schalen (10a, 10b) geformte Schelle (10) und Mittel zum Feststellen der Schelle um das Seil, wobei wenigstens eine der Schalen Mittel (15) zum Verbinden mit dem lastübertragenden Element umfasst, wobei das Seil eine Gruppe von gespannten Strängen (6) umfasst, die vertikal entlang der Schelle in einer verformbaren Matrize (12, 13, 14) enthalten sind, die die Zwischenräume zwischen den Strängen ausfüllt, wobei wenigstens ein Teil der Matrize aus einem Kunststoff ist, der unter Einwirkung von Feststellmitteln fließen kann,
**dadurch gekennzeichnet, dass** die Feststellmittel langgestreckte Feststellelemente (17; 37) umfassen, die eine Spannkraft auf die Schalen der Schelle übertragen und so belastet sind, dass sie eine elastische Längsverformung aufweisen, die wesentlich höher ist als das maximale Senken durch Fließen der Matrize.

2. Vorrichtung nach Anspruch 1,
bei welcher jedes langgestreckte Feststellelement (17; 37) so belastet ist, dass es eine elastische Längsverformung aufweist, die wenigstens fünf mal höher als das maximale Senken durch Fließen der Matrize (12, 13, 14) ist.

3. Vorrichtung nach Anspruch 1 oder 2,
bei welcher jeder gespannte Strang (6) des Seils aus einer Litze (7) besteht, die von einem festhaftenden elastomeren Material (8) ummantelt ist und von einem einzelnen Mantel (9) aus Kunststoff umgeben ist, wobei die Litze und das elastomere Material den Innenraum des einzelnen Mantels ausfüllen.

4. Vorrichtung nach Anspruch 3,
bei welcher die Matrize Einsätze (14) mit einem Querschnitt in krummlinige Dreiecksform umfasst, die so angeordnet sind, dass sie vertikal entlang der Schelle (10) die komplementär geformten Zwischenräume ausfüllen, die sich zwischen den einzelnen Mänteln (9) der gebündelt zusammengefügten Stränge (6) befinden.

5. Vorrichtung nach Anspruch 4,
bei welcher die Matrize weiterhin elastomere Elemente (13) umfasst, die am Umfang des Strangbündels (6) angeordnet sind, wobei eine rohrförmige Umhüllung aus Kunststoff die elastomeren Elemente umgibt, auf welcher die Schalen (10a, 10b) der Schelle anliegen.

6. Vorrichtung nach einem der Ansprüche 1 bis 5,
bei welcher jedes langgestreckte Feststellelement (17) ein Metallstab ist, dessen wenigstens eines Ende ein Gewinde (20) zur Aufnahme einer Mutter (21) aufweist, welche zum Spannen des Metallstabs verwendet wird.

7. Vorrichtung nach einem der Ansprüche 1 bis 5,
bei welcher die langgestreckten Feststellelemente gespannte Seile (37) sind, die an wenigstens einem Ende (38) mit Hilfe einer Abspannbacke (39) festgestellt sind.

8. Vorrichtung nach einem der Ansprüche 1 bis 7,
bei welcher jedes langgestreckte Feststellelement (17) in wenigstens einem Abstandsrohr (18a, 18b; 18) angeordnet ist, das mit einem Schutzmaterial (44) wie zum Beipiel einem Mineralölparaffin, einem Fett oder einem Harz gefüllt ist.

9. Hängebrücke umfassend wenigstens ein Tragseil (3), das an seinen
beiden Enden verankert ist, und eine Fahrbahnplatte (1), die mit Hilfe von Hängern (4) am Tragseil hängt,
bei der wenigstens gewisse der Träger mit Hilfe von Vorrichtungen nach einem der Ansprüche 1 bis 8 am Tragseil befestigt sind.

10. Hängebrücke nach Anspruch 9,
bei der die Befestigungsvorrichtung einen Bestandteil aufweist, der wesentlich über das Tragseil (3) hinausragt und der ein belastetes Feststellelement (17) enthält, wobei das obere Ende des Bestandteils mit Mitteln (26) zum Befestigen eines Geländers für den Verkehr von Betriebspersonal entlang des Trägerseils ausgestattet ist.

11. Verfahren zum Befestigen eines lastübertragenden Elements (4) an einem Seil (3) mit Hilfe einer Schelle (10), die aus wenigstens zwei Schalen (10a, 10b) geformt ist, wobei das Seil eine Gruppe aus gespannten Strängen (6) umfasst, die in einer Matrize (12, 13, 14) vertikal entlang der Schelle enthalten sind, wobei wenigstens ein Teil der Matrize aus einem Kunststoff ist, der unter Einwirkung einer auf die Schelle ausgeübten Feststellung fließen kann, bei welchem die Schalen der Schelle mit Hilfe von langgestreckten Feststellelementen (17; 37) um das Seil herum festgestellt werden, welche so belastet werden, dass sie eine elastische Längsverformung aufweisen, die wesentlich höher als das maximale Senkungsmaß durch Fließen der Matrize ist.

12. Verfahren nach Anspruch 11,
umfassend einen Schritt zur gleichzeitigen Belastungssbeaufschlagung auf die langgestreckten Feststellelemente (17; 37) mit Hilfe eines hydraulischen Systems (31) und einen Schritt zur Blockierung der langgestreckten Feststellelemente in belasteter Position.

13. Verfahren nach Anspruch 12,
bei welchem die Schritte zur gleichzeitigen Belastungsbeaufschlagung und zur Blockierung in gespannter Position ausgeführt werden, nachdem die Schelle (10) um das Seil (3) herum angeordnet wurde, sowie auch während späterer Kontroll- und Nachspannarbeiten.

14. Verfahren nach Anspruch 12 oder 13,
bei welchem der Schritt zur gleichzeitigen Belastungsbeaufschlagung eine erste Phase umfasst, während der das hydraulische System (31) einen Belastungsüberschuss ausübt, gefolgt von einer zweiten Phase, bei der man die beaufschlagten Belastungen vor dem Fortfahren mit dem Blockierungsschritt reduziert.

## Claims

1. A device for attaching a load-transmitting element (4) to a cable (3), comprising a collar (10) formed of at least two shells (10a, 10b) and means for clamping the collar around the cable, at least one of the shells having means (15) providing a link with the load-transmitting element, the cable comprising an assembly of tensioned strands (6) contained, at the level of the collar, in a deformable matrix (12, 13, 14) filling the interstices between the strands, at least part of the matrix being in a plastic material that is susceptible to creep under the action of the clamping means, **characterised in that** the clamping means comprise elongate clamping elements (17; 37) which transmit a clamping force to the shells of the collar and which are stressed so as to have a longitudinal elastic deformation that is substantially greater than the maximum settlement of the matrix due to creep.

2. A device according to claim 1, wherein each elongate clamping element (17; 37) is stressed so as to have a longitudinal elastic deformation at least five times greater than the maximum settlement of the matrix (12,13,14) due to creep.

3. A device according to claim 1 or 2, wherein each tensioned strand (6) of the cable consists of a strand (7) coated with an adherent elastomer material (8) and surrounded by an individual sheath (9) of plastic material, whereby the strand and the elastomer material fill the interior space of the individual sheath.

4. A device according to claim 3, wherein the matrix comprises inserts (14) having a triangular-shaped cross-section with curved sides, placed so as to fill, at the level of the collar (10), the interstices of matching shape located between the individual sheaths (9) of the strands (6) assembled in a bundle.

5. A device according to claim 4, wherein the matrix further comprises elastomer elements (13) arranged at the periphery of the bundle of strands (6) and a tubular envelope (12) of plastic material surrounding the elastomer elements, on which the shells (10a, 10b) of the collar bear.

6. A device according to any one of claims 1 to 5, wherein each elongate clamping element (17) is a metal rod, at least one end of which has a thread (20) for receiving a nut (21) used to apply stress to it.

7. A device according to any one of claims 1 to 5, wherein the elongate clamping elements are tensioned cables (37), at least one end (38) of which is clamped by means of anchoring jaws (39).

8. A device according to any one of claims 1 to 7, wherein each elongate clamping element (17) is housed in at least one bracing tube (18a, 18b; 18) filled with a protective substance (44) such as a petroleum wax, a grease or a resin.

9. Suspension bridge comprising at least one bearing cable (3) anchored at its two ends and a deck (1) suspended from the bearing cable by means of hangers (4), wherein at least some of the hangers are attached to the bearing cable by means of devices according to any one of claims 1 to 8.

10. A suspension bridge according to claim 9, wherein the attachment device has a portion (18) which projects substantially above the bearing cable (3) and which contains a stressed clamping element (17), the top end of said portion being fitted with means (26) for fixing a hand rail to allow personnel to move along the bearing cable.

11. A method of attaching a load-transmitting element (4) to a cable (3) by means of a collar (10) formed of at least two shells (10a, 10b), the cable comprising an assembly of tensioned strands (6) contained in a matrix (12, 13, 14) at the level of the collar, at least part of the matrix being in a plastic material susceptible to creep under the clamping action exerted on the collar, wherein the shells of the collar are clamped around the cable by means of elongate clamping elements (17; 37) which are stressed so as to have a longitudinal elastic deformation substantially greater than the maximum settlement of the matrix due to creep.

12. A method according to claim 11, comprising a step of simultaneously applying the stresses to the elongate clamping elements (17; 37) by means of a hydraulic system (31), and a step of clamping the elongate clamping elements in the stressed position.

13. A method according to claim 12, wherein said steps of simultaneously applying stresses and clamping in the stressed position are effected after the collar (10) has been fitted around the cable (3), as well as during subsequent monitoring and re-clamping operations.

14. A method according to claim 12 or 13, wherein the step of simultaneously applying stresses comprises a first phase in which the hydraulic system (31) exerts an excessive stress followed by a second phase in which the applied stresses are reduced before proceeding with the clamping stage.
